# EUROPEAN PATENT APPLICATION

(11) **EP 3 892 569 A1**
(43) Date of publication of application: **13.10.2021**
(21) Application number: 20386025.9
(22) Date of filing: 21.05.2020
(51) Int. Cl.: B65D 81/34

(54) **FLEXIBLE FILM PACKAGING**

(30) Priority: 09.04.2020 GR 20200100187
(71) Applicant: Athanasios D. Koukoutaris A.E.V.E., 50100 Kozani (GR)
(72) Inventor: Koukoutaris, Dionysios, 50100 Kozani (GR)
(74) Representative: Perivolaris, Panagiotis

(57) **Abstract**

This invention is a special flexible film packaging, made of various materials, which is used for baking frozen dough products or for warming already baked dough products, from flour of any type directly from the freezer.

In this case, the invention consists of paper only or from paper and polypropylene "window", polyester, cellophane or polylactide (PLA) or polyester only (Plan F). Also, this invention is a package suitable for storing dough products in the freezer.

In this invention, there is no need to transfer the product out of its packaging to the home baking dish but immediately after its purchase or after its freezing in a home freezer the flour dough product of any type can be transferred along with the invention directly to the oven or microwave oven for baking or heating, respectively, without having to remove the invention and separate it from the product.

## Description

This invention is a special flexible film packaging, made of various materials, which is used for baking frozen dough products or for warming already baked dough products, from flour of any type directly from the freezer **(Plan A, Plan C, Plan E, Plan F).**

Until today, there are no such packages in the trade and this results in the user being forced to carry dough products, either frozen or ready to bake, from their packing to the home baking dish, which often has as a result that the dough products are carried partially or damaged in the home baking dish and they show badly after the baking. In other cases there are packages, which are put directly into the oven along with the dough product but, due to their composition, they turn black and sometimes are burnt due to high oven temperatures and as a result it is difficult to detach them from the food product.

In this case, the invention consists of paper only or from paper and polypropylene "window", polyester, cellophane or polylactide (PLA) or polyester only (Plan F). Also, this invention is a package suitable for storing dough products in the freezer.

In this invention, there is no need to transfer the product out of its packaging to the home baking dish but immediately after its purchase or after its freezing in a home freezer the flour dough product of any type can be transferred along with the invention directly to the oven or microwave oven for baking or heating, respectively, without having to remove the invention and separate it from the product.

The frozen dough products for which the special packaging is used are made of all types of flour, such as wheat flour, cereal flour, legume flour, fruit flour and any another type of flour and with this invention can be baked or warmed, in the oven or microwave oven accordingly, directly from the freezer at a certain temperature and time and the invention does not suffer any alteration that will endanger the product within it.

In this invention, the result of baking is one product with the same quality features as the one that will be baked in oven or will be rewarmed in oven or microwave oven without the special packaging **(Plan B, Plan D).**

This invention can be used for ready-made baking product either from the freezer directly in the oven or from the freezer to the microwave oven for rewarming.

The quality features of this invention are the color of the product, the baking of the product in its inside and the texture of its sheet.

When the product is baked or reheated in this invention, it is perfectly healthy because, while it is cooked inside the specific packaging, it becomes sterile from germs.

This invention achieves equable baking of the whole of the dough product both regarding the part of it that remains uncovered by this invention as well as regarding its part that which is covered by it.

## Claims

1. This invention is a special flexible film packaging, made of various materials, which is used for baking frozen dough products or for warming already baked dough products, from flour of any type directly from the freezer **(Plan A, Plan C, Plan E, Plan F)** and is
**characterized by** the fact that there is no need to transfer the product from its packaging in the home baking dish but immediately after its purchase or after its freezing in a home freezer the flour dough product of any type can be transferred along with the invention directly to the oven or microwave oven for baking or heating, respectively, without having to remove the invention and separate it from the product.

2. The special flexible film packaging which is suitable for baking frozen dough products or for heating ready-baked flour products of all types of flour consists of paper only or from paper and polypropylene "window", polyester, cellophane or polylactide (PLA) or polyester only **(Plan F).**

3. This invention is a package suitable for storing in the freezer.

4. In this invention, there is no need to transfer the product out of its packaging to the home baking dish but immediately after its purchase or after its freezing in a home freezer the flour dough product of any type can be transferred along with the invention directly to the oven or microwave oven for baking or heating, respectively, without having to remove the invention and separate it from the product.

5. The frozen dough products for which the special packaging is used are made of all types of flour, such as wheat flour, cereal flour, legume flour, fruit flour and any another type of flour and with this invention can be baked or heat, in the oven or microwave oven accordingly, directly from the freezer at a certain temperature and time and the invention does not suffer any alteration that will endanger the product within it.

6. In this invention, the result of baking is one product with the same quality features as the one that will be baked in oven or will be reheated in oven or microwave oven without the special packaging **(Plan B, Plan D).**

7. This invention can be used for ready-made baking product either from the freezer directly in the oven or from the freezer to the microwave oven for reheating.

8. The quality features of this invention are the color of the product, the baking of the product in its inside and the texture of its sheet.

9. When the product is baked or reheated in this invention, it is perfectly healthy because, while it is cooked inside the specific packaging, it becomes sterile from germs.

10. This invention achieves equable baking of the whole of the dough product both regarding the part of it that remains uncovered by this invention as well as regarding its part that which is covered by it.
